# EUROPEAN PATENT APPLICATION

(11) **EP 2 209 282 A1**
(43) Date of publication of application: **21.07.2010**
(21) Application number: 09150701.2
(22) Date of filing: 16.01.2009
(51) Int. Cl.: H04L 29/06

(54) **A method, device and computer program product for service balancing in an electronic communications system**

(71) Applicant: Telefonaktiebolaget L M Ericsson (publ), 164 83 Stockholm (SE)
(72) Inventor: Aspernäs, Bertil, 385 40, Bergkvara (SE); Isaksson, Lennart, 371 32, Karlskrona (SE)
(74) Representative: Andersson, Björn E.

(57) **Abstract**

A method of service balancing in an electronic communications system. The method comprises receiving (210) a service request for a service to be invoked in the data communication system; determining (220) a current services balance of the electronic communications system; based on the current services balance, determining (230) if and when the service is to be invoked; and invoking (240a) or rejecting (240c) the service.

## Description

### Technical Field

The present invention relates generally to a method and apparatus for service balancing in an electronic communications system.

### Background

Many types of services executed in communications systems and networks for data and/or telecommunication rely on the built in mechanisms provided both on the software, hardware and the infrastructure of the systems. These types of services could be e.g. creating a new account for using the cellular phone infrastructure in a telecommunications network, change of contents of a service, which could be an upgrade to UMTS instead of GPRS, and in some cases removal of an account. All these scenarios are related to different situations and for those reasons also different types of services. This applies not only to voice calls, but also to receiving and transmitting data. Services become more and more complex, e.g some services are divided into a number of sub services, and thereby they have an impact on the overall system performance. Some kind of service balancing may be implemented in order to improve the overall system performance.

US-A-6 744 877 discloses a method and system for processing an enterprise's incoming customer communications on the basis of the enterprise's business objectives. An enterprise service balancer distributes work based upon enterprise resources and immediate resource availability. The enterprise service balancer provides an instantaneous best possible service for a customer communication (e.g., a call) by matching the customer communication with the most appropriate available resource in the enterprise, as a whole, in accordance with the enterprise's definition of best service.

This and other prior art methods and systems for service balancing in communications systems rely on fast performance, which may require e.g. use of the latest hardware or software. The software configuration is also considered in order to process services as efficient as possible due to throughput and latency. Moreover, the hardware and software may differ depending on the type of service to be processed. Some basic constraints could be configured in advanced, e.g. the number of CPU's and the size of a queue of services to be executed. However, even if predefined constraints are configured properly according to instructions, the performance of the system may still be a problem.

According to some existing solutions, the performance of a particular service is considered as static and is sub optimized in advanced. Thereby, the overall performance and the individual QoS of a service are based on a sub optimized behaviour. However, services change fast and for that reason also the behaviour of the system. The changes of the behaviour of the system due to changes of the services will unavoidably together increase the uncertainty of the overall performance of the system. Services being divided into sub services or jobs will add to the uncertainty of the overall performance of the system.

Services could consist of a long chain of small services. These types of services could be executed on different types of nodes (hardware and software) doing different kind of jobs e.g. a lookup function searching for user data. Each chain of work is not the same in sequence or the number of nodes used could also differ. In the case of long chain of services, the feedback time regarding performance and expected behaviour measured could take too long to be used in a stabled control system. In a case where the main service may consist of small services, the order in which each service is used may vary depending on the composite services in mind.

The interaction between similar or different types of services dynamically changes the condition of the overall system instantly. Considering a static configuration of a system when deciding on service balancing of complex services also results in an uncertainty of the overall performance of the system. Improved service balancing is needed to meet the performance requirements on communication systems concurrently with the increased complexity of new services, which may be divided into sub services or jobs.

### Summary

It is an object to overcome at least some of the above-mentioned disadvantages and to improve service balancing in a data communication system.

A first aspect of the present invention is a method of service balancing in an electronic communications system. The method comprises:
receiving a service request for a service to be invoked in the data communication system;
determining a current services balance of the electronic communications system;
based on the current services balance, determining if and when the service is to be invoked; and
invoking or rejecting the service.

The above-mentioned determining of the current services balance may in some embodiments involve:
selecting and simulating a performance model associated with the service request;
based on the result from the simulation, generating estimates of Key performance Indexes; and
determining the services balance based on the Key performance Indexes.

If and when the service is to be invoked may in some embodiments be determined by generating a decision - based on the Key performance Indexes - whether the service request should continue, wait or be rejected.

According to some embodiments, the above-mentioned determining of a current services balance may be based on the current performance of the communications system.

The current performance of the communications system as mentioned above may in some embodiments be determined by:
collecting for each service, service execution related information, including a starting time stamp of the invocation of the service, a resulting time stamp when the service is completed, and a service ID; and
calculating the current performance of the communication system based on the service execution related information.

The current performance may be compared with the performance model for determining the current services balance.

According to some embodiments the method comprises: analyzing the result of comparing the current performance with the performance model, and updating the performance model based on the result of the analysis.

The service may be a chain of partial services.

A second aspect of the invention is a computer program comprising program instructions for causing a computer to perform the method according to the first aspect of the invention, when said program is run on a computer.

The computer program may be stored on a carrier and comprise computer executable instructions for causing a computer to perform the method according to the first aspect of the invention, when said program is run on a computer.

The above-mentioned carrier may be, but is not limited to, a record medium, computer memory, read-only memory or an electrical carrier signal.

A third aspect of the invention is a computer program product comprising a computer readable medium, having thereon: computer program code means, when said program is loaded, to make the computer execute the process according to the first aspect.

A fourth aspect of the invention is a service balancing device for performing service balancing in a data communications system. The service balancing device may comprise a service controller configured to:
receive a service request;
request a determination of a current services balance;
receive a decision based on the current services balance about whether the service request should continue, wait or be rejected, based on the decision, determine if and when the service is to be invoked; and
invoke or reject the service.

In some embodiments the service balancing device may comprise a service parser configured to:
receive a service request;
determine the type of the requested service for a service to be executed by the data communications system; and
forward the service request to the service controller.

The service balancing device may in some embodiment comprise:
An admission controller configured to:
   receive a request for determination of a current services balance from the service controller;
   select and simulate a performance model associated with the service request for generating estimates of Key performance Indexes; and
   generate a decision for the service controller - based on the Key performance Indexes - whether the service request should continue, wait or be rejected.

According to further embodiments, the above-mentioned admission controller is configured to:
receive service execution related information for each service executed by the data communication system, said information including a starting time stamp of the invocation of the service, a resulting time stamp when the service is completed, and a service ID;
calculate a current performance of the communication system based on the service execution related information;
compare the current performance with the performance model for determining the current services balance,
analyze the result of the step of comparing the current performance with the performance model; and
update the performance model based on the result of the analysis.

A priority based service balancing due to the expected outcome of the performance of different services according to the described method and device is advantageously for the system performance. Service balancing based on the consideration of dynamic interaction of the constraints inside the system may also increase the performance.

It should be emphasized that the term "comprises/ comprising" when used in this specification is taken to specify the presence of stated features, integers, steps or components but does not preclude the presence or addition of one or more other features, integers, steps, components or groups thereof.

### Brief Description of the Drawings

In order to explain the invention in more detail and the advantages and features of the invention, a preferred embodiment will be described in detail below, reference being made to the accompanying drawings, in which
FIG. 1 shows a block diagram illustrating an example of a communications system including a service balancer according to one embodiment of the invention and a main communication system,
FIG. 2 shows a flowchart of a method of service balancing according to one embodiment of the invention;
FIG. 3 shows a flowchart of a method of service balancing in an open loop according to oen embodiment of the invention;
FIG. 4A shows a flowchart of a method of service balancing in a closed loop according to one embodiment of the invention;
FIG. 4B shows a flowchart of a method of service balancing in a closed loop according to an alternative embodiment of the invention; and
FIG. 4C shows a flowchart of a method of service balancing in a closed an learning loop according to an alternative embodiment of the invention;

### Detailed Description

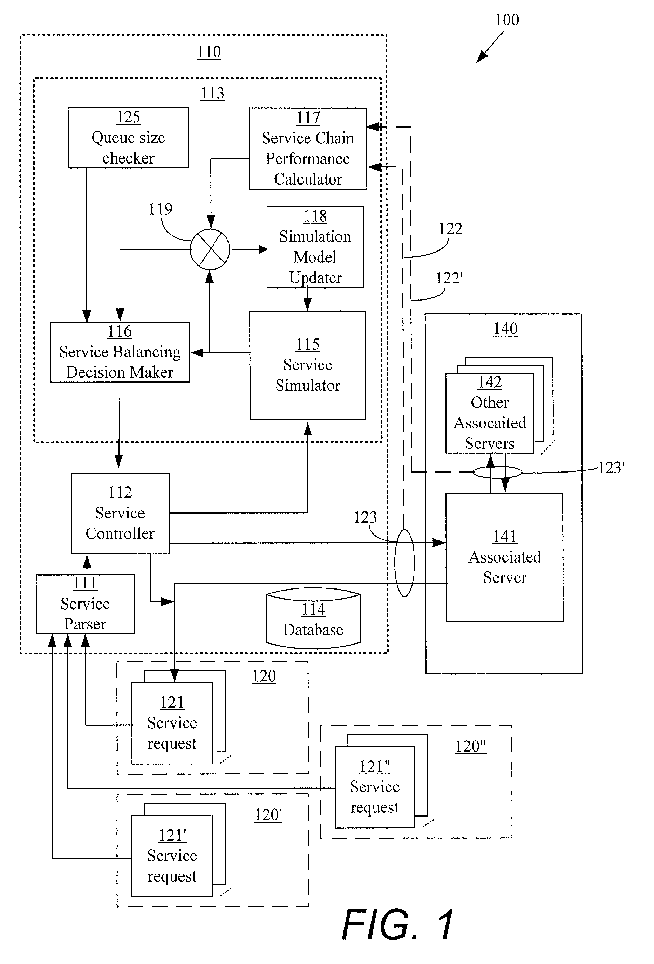

FIG. 1 illustrates an example of an electronic data or telecommunications system 100 comprising a service balancer 110 for service balancing of services and a main communications system 140 for executing the services according to instructions from the service balancer. 110.

The service balance may comprise a digital electronic computer or computer apparatus and processes performed in a computer apparatus or system. The computer apparatus or system may be used in the electronic data or telecommunications network or system 100 and may comprises a data processing system, including a computer processor for processing data, and storage means connected to the computer processor for storing data on a storage medium.

The service balancer 110 comprises but is not limited to a service parser 111 for receiving and classifying service requests to be executed by the main communications system 140, a service controller 112 for controlling the arrival rate of the service requests, and an admission controller 113 for generating decisions for the service controller 112 for controlling the arrival rate of the service requests to the main communications system 140.

One way of a better prediction of the behaviour of the performance is to investigate the type of service before it enters the main system. Based on previous knowledge the service may be classified. If not, the "new" service may be measured and saved to the next time the service is to be used. After classification and measurement the system is better prepared to better optimize the system the next time.

Hence, the service parser 111 may be configured to first look at the type of service entering the communication system 100 before the service is allowed to enter the main communications system 140 for execution. Thereby, the knowledge of how this service will behave in the near future may be determined in advance both in utilizations of each node of the main communications system 140 and in the time spent in the system. The information about the requested service will be used to make a decision by the admission controller 113 when to let the service enter the main communications system 140. The information may be stored in a database 114 for further use. Thus, received service requests may be classified based on the knowledge of the requested services.

Also, service requests for new type of services may be identified by the service parser 111. Even if the service is new its new service chain is being logged and will be fed into the admission controller 113 to be used in the process of making decisions for the service controller 112 for controlling the arrival rate of the service requests.

The basic concept behind the invention is to have the service controller 112 for controlling the arrival rate of service requests before the services enters the main communications system 140. Hence, the service controller 112 may be configured to control the arrival rate of service requests for the main communications system 140 based on new or previously collected information about the requested service and the behaviour of the service or a combination thereof. The information about the behaviour of the service may be based on information collection during real executing of the service or information from a simulation of the behaviour of the service during execution. A combination of information from a real execution with information from a simulation may also form basis for a decision made by the service balancer 113 for the service controller 112. Based on current performance measurements, which is conducted during the service being used, a real-time decision could be made to control the arrival rate instead of hoping that the system take care of the problem itself. Based on previous experience about the behaviour of the service stored in the database 114, the system will in advance be able to fine tune and optimize the performance. Also, based on long term saving of information and behaviour of previous situations the system could further be optimized by experience. If more information is needed different scenarios could be simulated to further strengthen the decision. If several services intend to enter the communication system or network in a short period of time (burst or bulk) the service controller generates new arrival rates for each service to the main communications system 140.

The admission controller 113 may comprise, but is not limited to, a service simulator 115 for simulation of performance models and analysis of service chains, a service Balancing Decision Maker 116 for generating decisions for the service controller 112, and a service chain performance calculator 117 for collecting service execution related information from the main communications system.

A simulation model updater 118 for updating the simulation performance models of service chains of the service simulator and a comparator 119 for comparing the current performance and the performance model may also be a part of the admission controller 113.

A queue size checker 125 may be used for performing a simple queue size check of service requests. The result of the queue check may be fed to and affect the decision made by the service balancing decision maker 116. The queue check result may be based on, but is not limited to, a first-in-first-out bases to be used by the service balancing decision maker 116.

Service balancing may involve both time balancing for services and parallel work distribution simultaneously. With respect to the time balancing, the service (complete work) has to be done at the resources, and the current service situation in the main communication system or network may define the right time for invoking services. Regarding the load itself parallel work distribution may also be considered. There is also other situations to be considered, some on particular resources (operating system) and some on other resources (network interfaces), and some resources do have redundancy and some not. The current load situation in the communications system or network defines the work distribution among the resources.

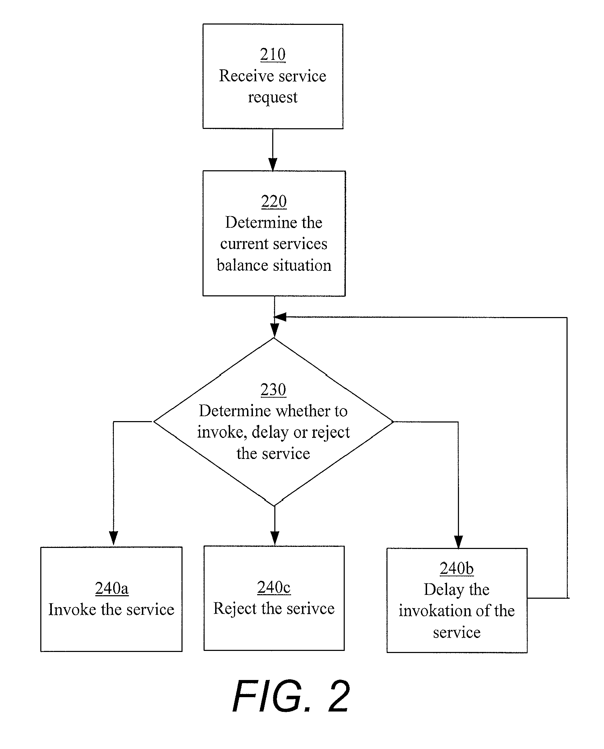

The operation of the service balancer 110 will now be described in further detail with reference to the block diagram of FIG 1 and the flowchart in FIG 2 of a method of service balancing according to one embodiment of the invention.

A service, which may be a compound service 120 comprising a number of subservices in a service chain, may give rise to a number of a service requests 121 for services to be executed by the main communications system 140. The service balancer 110 receives at least one service request 121 for the service 120 in step 210 to be invoked in the main communications system 140 of the electronic data or telecommunications system 100. In step 220 the service balancer 110 determines the current services balance situation of the main communications system 140. Based on the current services balance situation the service balancer 110 determines if and when the service is to be invoked in step 230. No measurement from network is needed, but only a decision based on á priori known information on how services propagate through the service chain is necessary. If it is determined that the service should be invoked, the first service in the chain is invoked in step 240a. However, if it is determined that the service is to be delayed in step 240b for some reason, the invocation of the service is postponed until a later time according to the decision made by the service balancer 113. If it is determined that the service should be rejected in step 230, the service request is rejected in step 240c.

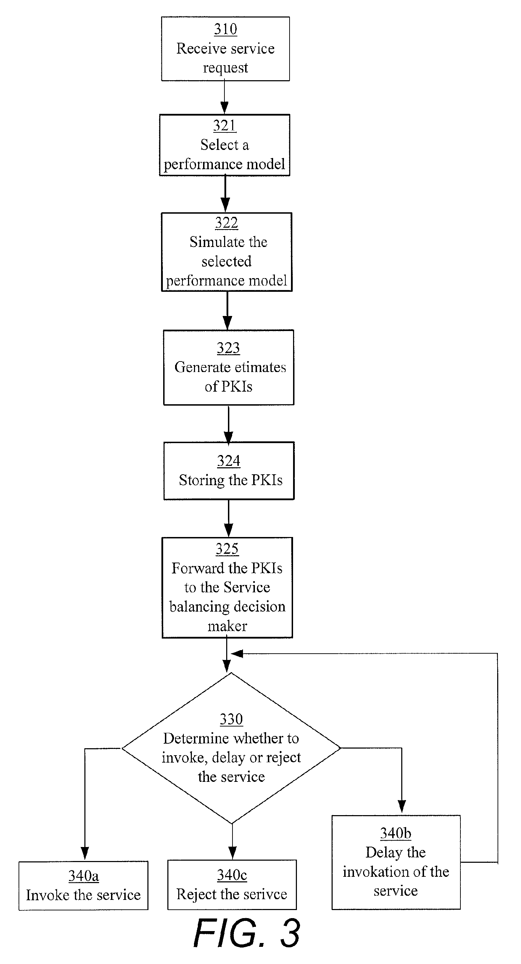

According to one embodiment, the services balance situation is predicted by simulation of a performance model in an open loop. This embodiment is described with reference to FIG 3.

A service, which may be a compound service 120' comprising a number of subservices in a service chain, may give rise to a number of a service requests 121' for services to be executed by the main communications system 140. The service balancer 110 receives at least one service request 120' for the service in step 310 to be invoked in the main communications system 140 of the electronic data or telecommunications system 100.

The service balancer 110 determines the current services balance situation of the main communications system 140.The current services balance situation may comprise the steps of selecting 321 and simulating 322 a performance model of the current situation and generating 323 estimates of Key performance Indexes (KPI) for the situation, and storing 324 the Key performance Indexes in the database 114 for use when the service is requested again at a later time. The KPIs resulting from the simulation are forwarded to the service balancing decision maker in step 325 to be used in the process of generating the decision about whether the service request should continue, wait or be rejected in step 330. Hence, no measurement from the main communications system or network is needed, but only a decision based on á priori known information (model) on how services propagate through the service chain is necessary.

Based on the current services balance situation the service balancing decision maker 116 determines if and when the service is to be invoked in step 330. If it is determined that the service should be invoked, the first service in the chain is invoked in step 340a. However, if it is determined that the service is to be delayed in step 340b for some reason, the invocation of the service is postponed until a later time according to the decision made by the service balancing decision maker 116. If it is determined that the service should be rejected in step 330, the service request is rejected in step 340c.

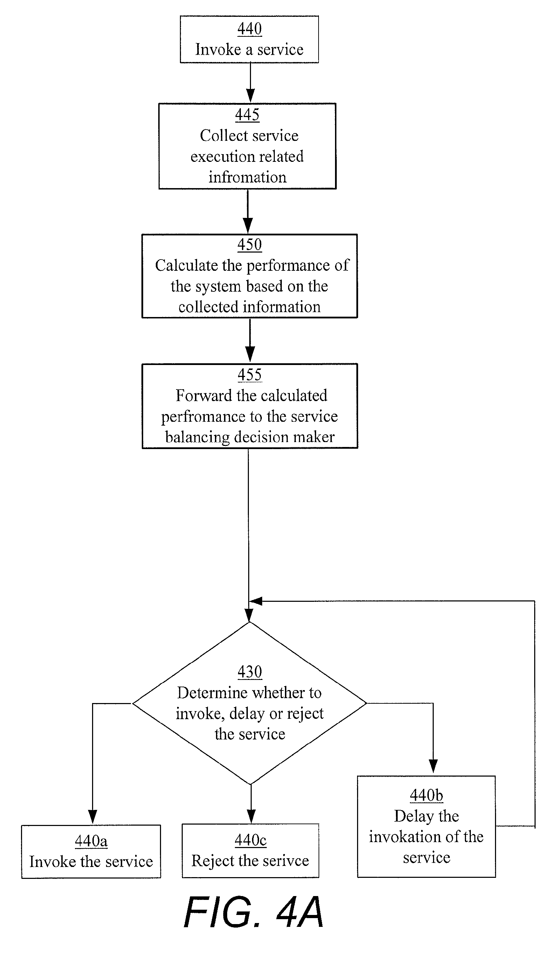

However, if the service is not previously known by the service balancer 110, the service corresponding to the requested service may be measured and information about the service is saved in the database 114 to be used the next time the service is requested form the communications system 140. After classification and measurement the system is better prepared to better optimize the system next time the service is requested. This scenario is described on connection with another embodiment. The current services balance situation is determined by considering the influence on the main communications system 140 by the execution of a service 120" or service chain in a closed loop. This embodiment is described in connection with FIG 4A. The service starts to execute when the service controller 112 sends a service invocation in step 440 to an associated server 141 of the main communications system 140. The invocation of the service may be a direct request or a result from the method according to the open loop embodiment described above or a result from a method based on no admission control. The associated server may in turn invoke other services of associated servers 142. For one or more services 120", the service chain performance calculator 117 may collect service execution related information from the main communications system in step 445, including a starting time stamp of the invocation of the service, a resulting time stamp when the service is completed, and a service ID (identification). The collection of information by the service chain performance calculator 117 is illustrated by the broken arrows 122 and 122' in FIG. 1. The ovals 123 and 123' at the starting point of the broken arrows 122 and 122' illustrate that protocols used in the invocation of services in the service chains encapsulate service IDs and time stamps at the invocation and the result time instant.

The performance information logged by each node in the main communications system is important both with respect to the accuracy and the time it could be used. According to one embodiment, the original Ethernet frame, used by the service, may be encapsulated (tunneling) together with the performance information in real time. This will provide a fast reaction of each new service which would like to enter the system. A generic routing encapsulation (GRE) may be used as a framework of this technique.

The new protocol, which is encapsulated together with the original Ethernet frame, may include three parts: 1. The node "visited" by the service; 2, The timestamp, which logs the entering and departure time of a service; and 3. The performance, which may be e.g. I/O, CPU utilization, memory etc.

This means that when a service enters a node in the main communications system or network, this is indicated with a timestamp and a start of the performance measurement. The performance measuring may be, but is not limited to, the workload of the main communications system. However, it may involve establishing of a resource usage profile. For example, the completion time of a service may depend heavily on I/O device performance. It is not only the utilization of a system, but it may also be related to the usage of a specific I/O device that is important to measure. Measured caching of memory could also be used due to the impact of the behaviour. So, some or several metric values may be measured. Still it is only those metrics that matters that will be used in any decision. When the service departure from the node, the information logged may now be saved into the protocol together with the departure time stamp. Each "visited" node may add this information. When the service departure, at the end of its service chain, it delivers this information to the service balancer for decision making and to the database to be stored.

The ID and time stamp are appended to the service request of each invocation and result, and may thereby be collected by the service chain performance calculator 117. Next, the service chain performance calculator 117 calculates a current performance of the communication system based on the collected service execution related information in step 450 and the current performance is forwarded to the service balancing decision maker 116 in step 455.

Based on the current services balance situation depending on the current performance, the service balancing decision maker 116 determines if and when the service is to be invoked in step 430. If it is determined that the service should be invoked, the first service in the chain is invoked in step 440a. However, if it is determined that the service is to be delayed in step 440b for some reason, the invocation of the service is postponed until a later time according to the decision made by the service balancing decision maker 116. If it is determined that the service should be rejected in step 430, the service request is rejected in step 440c.

Hence, the closed loop embodiment make use of measurements from the main communication or network in the process of service balancing decision making by means of protocol adjustments.

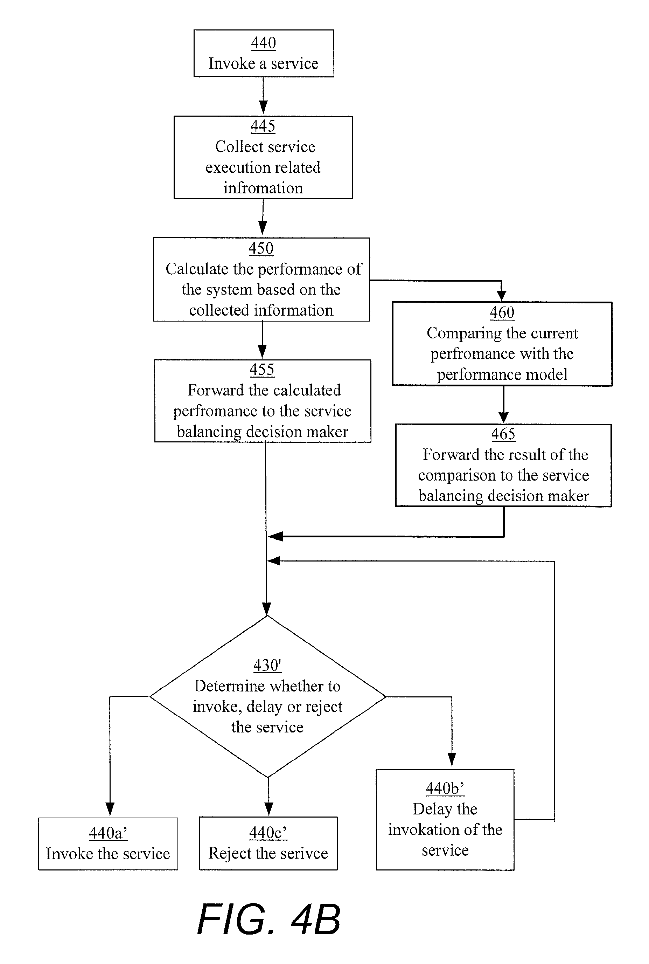

An alternative embodiment of the closed loop is shown in FIG 4B. The service starts to execute when the service controller 112 sends a service invocation in step 440 to an associated server 141 of the main communications system 140. The service chain performance calculator 117 may collect service execution related information from the main communications system in step 445, as described in connection with the first embodiment of the closed loop. The service chain performance calculator 117 calculates a current performance of the communication system based on the collected service execution related information in step 450 and the current performance is forwarded to the service balancing decision maker 116 in step 455.

In this alternative embodiment the current performance, is also compared with the performance model already present in the service simulator 115 by the comparator 119 in step 460, and the result is forwarded to the service balancing decision maker 116 in step 465. The result of the comparison and the current performance is used by the balancing decision maker in the process of generating the decision about whether the service request should continue, wait or be rejected in step 430'.

Based on the current services balance situation the service balancing decision maker 116 determines if and when the service is to be invoked in step 430'. If it is determined that the service should be invoked, the first service in the chain is invoked in step 440a'. However, if it is determined that the service is to be delayed in step 440b' for some reason, the invocation of the service is postponed until a later time according to the decision made by the service balancing decision maker 116. If it is determined that the service should be rejected in step 430', the service request is rejected in step 440c'.

In addition to information about unknown background service requests that show up in the measurements from the main communication or network, this alternative embodiment also make use of comparison between the current performance and the performance model, which may improve the service balancing decision making.

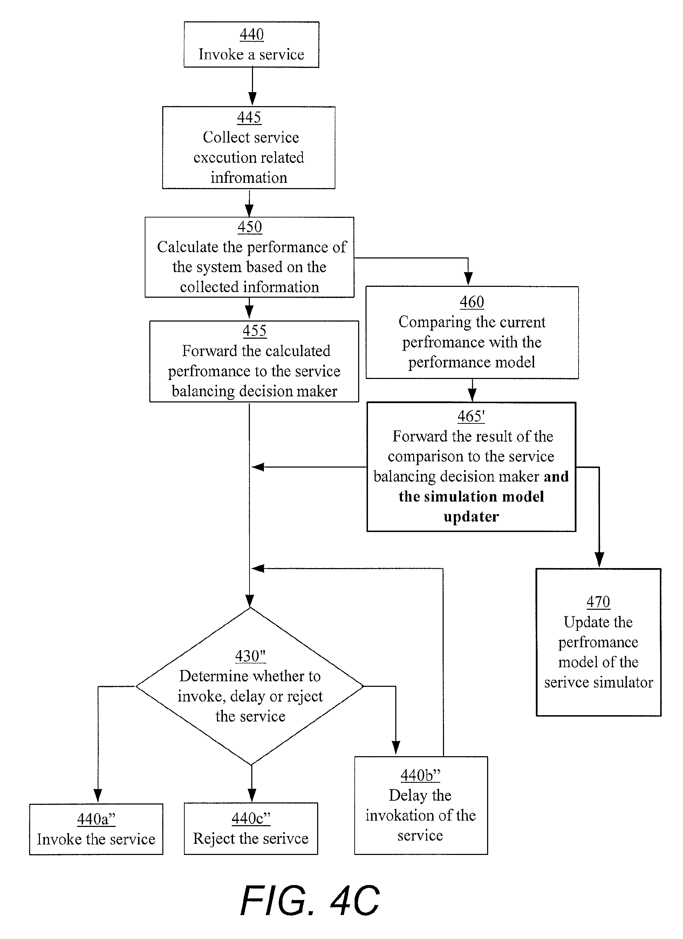

Still another alternative embodiment of the closed loop is the closed and learning loop admission control shown in FIG 4C.

In addition to the step of forwarding the result of the comparison to the service balancing decision maker 116, the comparison result is also forwarded to the simulation model updater 118 in step 465' for updating the performance model of the service simulator 115. Any differences between currently measured performance of services and performance model are analyzed and new customer behaviour of requesting services are captured and updates the performance model in a learning process in step 470. Hence, according to this alternative embodiment a shift in service popularity among service users show up as a difference in the communications system or network and the á priori known model. This difference is fed into an updating process (learning) for the performance model.

The resulting new and updated performance model may be simulated in different situation and used in the method for service balancing of services based on any of the embodiments of the open loop, closed loop, or closed learning loop. This is an advantage about using a service simulator connected to the service balancing decision maker.

The result of the comparison and the current performance is used by the balancing decision maker in the process of generating the decision about whether the service request should continue, wait or be rejected in step 430". If it is determined that the service should be invoked, the first service in the chain is invoked in step 440a". However, if it is determined that the service is to be delayed in step 440b" for some reason, the invocation of the service is postponed until a later time according to the decision made by the service balancing decision maker 116. If it is determined that the service should be rejected in step 430", the service request is rejected in step 440c".

If several service requests are received in a short period of time (burst or bulk) the service controller generates new arrival rates for each service to the main system. Although, this means that a queue of services is building up the main communication system may keep running thanks to the control of the arrival rate instead of killing the main system, which infects the overall performance. Based on pre-knowledge conducted by using traces or on-line measurements the constraints of the arrival rate could be predicted in advance in a more optimized way. The possibility of tracking old situation also better predicts the performance when controlling the arrival rate of a service.

Different types of algorithms may be used in the decision process performed by the service balancer and the service balancing decision maker. Some that will be considered are listed bellow:
· Fuzzy Logic
· Analytic Hierarchy Process (AHP), for decision making
· Exponential averaging, Sn+1 = αTn + (1 - α) Sn
· Learning process, system identification in real time.

The Fuzzy Logic together with Fuzzy Sets Theory is the enabler of all types of metric values which could be translated into a usable scale in decision making. One decision making method, which may be used is the AHP. This method gives the advantages of ranking the results. Exponential averaging is another method of handling technical issues with some "smartness" in mind. These algorithms may be used as tools of making the method of handling the performance for combined services as optimized as possible.

The Analytic Hierarchy Process (AHP) can be used for choosing the next service in time, in terms of metrics and constraints. Normally, criteria are not easy to quantify and the most critical task in the decision process is to define those criteria that are of importance. The metric values may be the input to the Multi-Criteria Decision Making (MCDM) process in which the transformed 9-point scale is being used. The outcome from the decision process, the service balancing decision maker 116, is a weighted priority list, which is fed into the service controller 112 with the final goal of control the arrival rate.

Service balancing considering the behaviour of different services according to how they will interact in the data communication system increases the system performance. Moreover, by controlling the arrival rate of services into the system, which heavily depends on current situation inside the system, considering a dynamic interaction of the constraints inside the system, used by all the services, also increase the performance of the system.

A priority based service balancing due to the expected outcome of the performance of services is advantageously for the overall system performance of the electronic communications system. Service balancing based on the consideration of dynamic interaction of the constraints inside the system may also increase the performance.

One of the benefits that an operator will gain from this concept is the ability to use the system more balanced. For example the service will maximize the throughput and minimize the latency time, which in total increases the overall performance.

The possibility of tracking old situation also better predicts the performance when controlling the arrival rate of a service.

A faster response and prediction of the behaviour created by the service and background traffic could be controlled.

Moreover, disasters regarding performance on both the service itself and the used system may be avoided.

Our compound services will now be more balanced in the time domain.

Both new and old services will be balanced.

Although the embodiments of the invention described with reference to the drawings comprise a computer apparatus and processes performed in the computer apparatus, the invention also extends to programs on or in a carrier, adapted for putting the invention into practice when the computer program is executed. The program may be in the form of source code, object code a code suitable for use in the implementation of the method according to the invention. The carrier can be any entity or device capable of carrying the program. For example the carrier may be a record medium, computer memory, read-only memory or an electrical carrier signal. Embodiments according to the invention may be carried out when the computer program product is loaded and run in a system having computer capabilities.

The many features and advantages of the invention are apparent from the detailed specification, and thus, it is intended by the appended claims to cover all such features and advantages of the invention, which fall within the scope of the invention. However, although embodiments of the method and apparatus of the invention has been illustrated in the accompanying drawings and described in the foregoing detailed description, the disclosure is illustrative only and changes, modifications and substitutions may be made without departing from the scope of the invention as set forth and defined by the following claims.

## Claims

1. A method of service balancing in an electronic communications system, comprising:
receiving (210) a service request for a service to be invoked in the data communication system;
determining (220) a current services balance of the electronic communications system;
based on the current services balance, determining (230) if and when the service is to be invoked; and
invoking (240a) or rejecting (240c) the service.

2. The method according to claim 1, wherein the step of determining (220) a current services balance comprises:
selecting (321) and simulating (322) a performance model associated with the service request;
based on the result from the simulation, generating (323) estimates of Key performance Indexes; and
determining (330) the services balance based on the Key performance Indexes.

3. The method according to claim 2, wherein determining (230) if and when the service is to be invoked, comprises: generating a decision - based on the Key performance Indexes - whether the service request should continue, wait or be rejected.

4. The method according to any of the preceding claims, wherein the step of determining a current services balance is based on the current performance of the communications system (430).

5. The method according to claim 4, comprising:
for each service, collecting (445) service execution related information, including a starting time stamp of the invocation of the service, a resulting time stamp when the service is completed, and a service ID; and
calculating (450) the current performance of the communication system based on the service execution related information.

6. The method according to claim 5, comprising: comparing (460) the current performance with the performance model for determining the current services balance.

7. The method according to claim 6, comprising: analyzing the result of the step of comparing the current performance with the performance model, and updating (470) the performance model based on the result of the analysis.

8. The method according to any of the preceding claims, wherein the service is a chain of partial services.

9. A computer program comprising program instructions for causing a computer to perform the method of any of the claims 1-8, when said program is run on a computer.

10. A computer program on a carrier and comprising computer executable instructions for causing a computer to perform the method according to any of the claims 1-8, when said program is run on a computer.

11. A computer program according to claim 10, wherein said carrier is a record medium, computer memory, read-only memory or an electrical carrier signal.

12. A computer program product comprising a computer readable medium, having thereon: computer program code means, when said program is loaded, to make the computer execute the process of any of the claims 1-8.

13. A service balancing device (110) for performing service balancing in a data communications system, comprising a service controller (112) configured to:
receive a service request;
request a determination of a current services balance;
receive a decision based on the current services balance about whether the service request should continue, wait or be rejected, based on the decision, determine if and when the service is to be invoked; and
invoke or reject the service.

14. A service balancing device according to claim 13, comprising:
a service parser (111) configured to:
receive a service request;
determine the type of the requested service for a service to be executed by the data communications system; and
forward the service request to the service controller (112).

15. A service balancing device according to claim 13 or 14, comprising:
an admission controller (113) configured to:
receive a request for determination of a current services balance from the service controller (112);
select and simulate a performance model associated with the service request for generating estimates of Key performance Indexes; and
generate a decision for the service controller (112) - based on the Key performance Indexes - whether the service request should continue, wait or be rejected.

16. The service balancing device according to claim 15, wherein the admission controller (113) is configured to:
receive service execution related information for each service executed by the data communication system, said information including a starting time stamp of the invocation of the service, a resulting time stamp when the service is completed, and a service ID;
calculate a current performance of the communication system based on the service execution related information;
compare the current performance with the performance model for determining the current services balance,
analyze the result of the step of comparing the current performance with the performance model; and
update the performance model based on the result of the analysis.

17. The service balancing device according to any of the preceding claims, wherein the service is a chain of partial services.
